# EUROPEAN PATENT SPECIFICATION

(11) **EP 3 539 758 B1**
(45) Date of publication and mention of the grant of the patent: **27.07.2022**
(21) Application number: 18305276.0
(22) Date of filing: 14.03.2018
(51) Int. Cl.: B29C 70/34, B29C 70/46, B29B 11/16

(54) **METHOD OF MANUFACTURING A COMPOSITE ARTICLE**
VERFAHREN ZUR HERSTELLUNG EINES VERBUNDARTIKELS
PROCÉDÉ DE FABRICATION D'UN ARTICLE COMPOSITE

(43) Date of publication of application: 18.09.2019
(73) Proprietor: Ratier-Figeac SAS, 46101 Figeac Cedex (FR)
(72) Inventor: LE MEUR, Kévin, 46100 Figeac (FR); BRION, Patrice, 46100 LUNAN (FR)
(74) Representative: Dehns

(56) References cited:
- EP-A1- 3 278 945
- WO-A1-02/28623
- DE-A1-102007 028 373
- US-A1- 2013 142 988
- US-A1- 2015 225 518
- US-A1- 2017 028 601

## Description

### Technical Field

The present disclosure relates to a method of manufacturing a composite article, in particular an article comprising reinforcing filaments and a thermoplastic matrix material. The method is particularly well adapted to the manufacture of a composite aircraft blade. The aircraft blade may for example be a fan blade for an engine such as a jet engine or gas turbine, or a propeller blade for an engine such as a turboprop engine or propfan.

### Background of the disclosure

Fan blades are a key component of gas turbine engines such as jet engines and serve to guide airflow and draw air into the engine, as well as to protect the engine from environmental hazards. In modern jet engines they can also have a significant role in providing thrust by propelling air through the engine. The fan blades are generally the first component of the engine to contact incoming air. Thus they contribute greatly to setting up the airflow through the engine.

Aircraft propeller blades provide the motive force for a propeller driven aircraft. They convert rotary motion from an engine into a force to drive the aircraft forward. As with fan blades they are the first component to contact the incoming air and the action of the propeller blades in generating thrust and guiding airflow is highly important to the operation of the aircraft.

Airfoil blades such as fan blades and propeller blades are exposed to outside factors such as varying air temperatures as well as bird impact and other damage from foreign objects. In addition, the blades must operate within the same envelope as the aircraft or gas turbine engine itself, which can include extremes of temperature, pressure, and airspeed. As a consequence the structure and manufacture of the blades is of great importance. The blades must be light and strong, as well as being tough enough to avoid or minimise damage when there is a high speed impact from a foreign object.

Airfoil blades have been formed of reinforced thermoset composite materials to fulfil these requirements. Reinforced thermoset composite materials are known to be extremely strong and lightweight, giving rise to a high strength-to-weight ratio. This can reduce the weight of the engine and increase efficiency while enabling the fan blade to withstand large impact forces.

Various methods for manufacture of composite articles exist. For example, it is known to build up textile layers in a mould to form the shape of the article, with the textile layers being pre-impregnated with a suitable matrix material such as a thermoplastic resin ('pre-preg' textile) or with the matrix material being applied to each layer as the layers of textile are built up. Resin transfer manufacturing (RTM) techniques are also used, where the textile layers are prepared in a mould absent any kind of matrix material, and the matrix material is then injected into the mould or drawn into the mould via vacuum in order to surround the textile with the matrix. RTM is commonly performed with a thermoset matrix material since thermosets have lower viscosity than thermoplastics. RTM processes utilising a thermoplastic matrix material require thermoplastics with a low viscosity, which result in poor mechanical properties.

One particular method used to form thermoplastic reinforced composite components is discussed in US 2013/0017094. A fibre blank (preform) is made by three dimensionally weaving fibres of reinforcing material. The fibre blank is then placed in a mould having a recess corresponding with the final shape of the component. The mould is then closed, and a liquid precursor is injected to fill the recess and impregnate the fibre blank. The precursor can be in the form of a polymer, such as a thermoplastic, which may be diluted in a solvent. Once injected into the mould, the precursor is polymerised by applying a heat treatment, transforming the precursor into a thermoplastic with a longer polymer chain, thus increasing the impact resistance and melting temperature of the thermoplastic.

This method provides a thermoplastic reinforced composite component in which the reinforcing material strengthens the composite material in three dimensions. However, thermoplastics with desirable physical properties for use in turbine engine components generally have a high molecular weight and high viscosity, making it difficult to inject liquid thermoplastic matrix material into woven reinforcing fibres. It is also difficult to inject highly viscous thermoplastics into woven structures containing a high concentration of reinforcing fibres. Thus, complex and time consuming steps are required in order to impregnate a woven fibre structure with a thermoplastic matrix material.

Reinforced materials comprising thermoplastics have the potential to offer an advantage over reinforced thermoset materials due to their high impact resistance and their ability to be remoulded or reshaped. Fan blades made of reinforced thermoplastic composite materials may therefore be repaired more easily than those comprising thermosetting plastics. However, as discussed above, there are various difficulties associated with manufacturing thermoplastic composite blades. Hence, there is a need for an improved method of manufacturing reinforced thermoplastic composite components.

US2017028601A1 discloses a method to form a part which comprises forming a pattern with a commingled yarn, attaching the pattern to a carrier material to form a preform, and using the preform to form a part. The commingled yarn comprises thermoplastic resin filaments formed from a thermoplastic material and reinforcing filaments formed from a reinforcing material. The reinforcing material has a glass transition temperature and/or a decomposition temperature that is higher than a glass transition temperature of the thermoplastic material.

### Summary of the Disclosure

Viewed from a first aspect, the present disclosure provides, in line with the invention, a method of manufacturing a composite article according to claim 1, preferably an aircraft propeller blade or fan blade, the method comprising:
providing a textile preform comprising a combination of filaments of reinforcing material with filaments of a thermoplastic matrix material;
placing the preform in a mould;
thermoforming the textile preform within the mould to consolidate the textile preform into a composite, the thermoforming including increasing the temperature above the melting temperature of the thermoplastic matrix material and applying pressure;
cooling the composite within the mould to below the glass transition temperature of the thermoplastic matrix material, thereby forming a composite article; and removing the composite article from the mould;
wherein at least a part of the filaments in the textile preform is in the form of (a) yarns each comprising a mixture of reinforcing material filaments and the thermoplastic matrix material filaments combined to form a single comingled yarn, and/or (b) one or more yarns of reinforcing material filaments combined with one or more yarns of the thermoplastic matrix material filaments.

In the arrangement (b), the yarns of reinforcing material filaments should preferably be intimately combined (e.g. twisted) with one or more yarns of the thermoplastic matrix material filaments. The reinforcing material filaments and thermoplastic matrix material filaments are thus in close proximity to each other. This is also so in the yarns (a). In this way, the bonding between the reinforcing material and the thermoplastic matrix is maximised during the thermoforming step, as is explained below.

The thermoplastic matrix material used in the method comprises a polymer with a weight average molecular weight (M_{W}) of at least 85 000.

According to one aspect of this disclosure, the thermoplastic matrix material used in the method has a viscosity of at least 250 Pa.s, or at least 300 Pa.s, or at least 350 Pa.s, or at least 400 Pa.s, or at least 450 Pa.s, as measured according to test ISO 11443 at 400°C.

According to the first step of the method, a textile preform is provided which comprises a combination of filaments of reinforcing material with filaments of a thermoplastic matrix material. The preform is produced by combining filaments of reinforcing material with filaments of a thermoplastic matrix material in a textile composite material.

The textile composite material may be a fabric structure comprising reinforcing filaments and a thermoplastic matrix material. The textile composite material may be a three dimensional woven fabric structure including reinforcing fibres (e.g. carbon fibres) as well as thermoplastic fibres.

At least part of the filaments in the textile preform may be present in the form of yarns. Each yarn may comprise filaments of reinforcing material and filaments of thermoplastic matrix material. These filaments may be mixed in known manner, e.g. using a spinning process, to form a single comingled yarn.

Yarns including both reinforcing material filaments and a thermoplastic matrix material may be combined with yarns of reinforcing material filaments. Yarns each comprising both reinforcing material filaments and thermoplastic matrix material may be combined with other yarns each comprising both reinforcing material filaments and thermoplastic matrix material. Yarns including both reinforcing material filaments and a thermoplastic matrix material may be combined with yarns of filaments of thermoplastic matrix material. Alternatively, yarns of reinforcing material filaments may be combined with yarns of filaments of thermoplastic matrix material.

In addition to one or more of the features described herein, or as an alternative, the yarns may comprise stretch broken fibres.

The preform may be produced in a variety of ways. The yarns may be combined by any of a variety of processes including weaving, knitting, braiding, extruding or the like. Weaving may comprise weaving two-dimensional layers. Alternatively, the filaments of reinforcing material may be mixed with filaments of a thermoplastic matrix material to form a tow incorporating both fibres, and the tows are used to make a woven or unidirectional textile layer. Textile layers may be stitched together into a three-dimensional woven structure. Textile layers may alternatively be joined by welding. Ultrasound welding may be used to join textile layers after they have been placed in the mould and prior to thermoforming. Alternatively weaving, knitting or braiding may comprise three-dimensional weaving, knitting or braiding techniques to form a three-dimensional fabric structure. A 3D woven structure may be a 3D interlock structure. This may be termed a 3D interlock woven fabric.

The fabric structures resulting from the combination of filaments of reinforcing material with filaments of a thermoplastic matrix material may be called a preform. In some examples, the fabric structure may a hollow shape, so that a core can be inserted therein after thermoforming.

The thermoplastic matrix material used in the method disclosed herein may comprise any one of the following polymers: polyether ether ketone (PEEK), polyetherketoneketone (PEKK), polyaryletherketone (PAEK). Mixtures of any of these polymers may also be used as the thermoplastic matrix material.

The thermoplastic matrix material used in the method disclosed herein should be selected such that, after thermoforming and cooling, the resulting composite article has suitable properties (e.g. impact resistance) for the intended purpose. For example, where the composite article is an aircraft propeller blade or fan blade, high impact resistance is required. For such purpose, PEEK is a preferred thermoplastic matrix material, especially PEEK having a high molecular weight. Suitable grades of PEEK for this purpose may have a weight average molecular weight (M_{W}) of at least 85 000. Suitable grades of PEEK for this purpose may also have a viscosity of at least 250 Pa.s, or at least 300 Pa.s, or at least 350 Pa.s, or at least 400 Pa.s, or at least 450 Pa.s, as measured according to test ISO 11443 at 400°C.

In addition to one or more of the features described above, or as an alternative, the reinforcing material filaments may comprise carbon, glass, an aramid or mixtures thereof.

The aforementioned yarns are typically composed of many filaments. It is preferred that the filaments of the reinforcing material and the filaments of the thermoplastic matrix material have the same (or roughly the same) diameter.

Each yarn that contains filaments of thermoplastic matrix material may, for example, comprise at least 100 filaments of thermoplastic matrix material, preferably at least 500 filaments of thermoplastic matrix material, more preferably at least 1000 filaments of thermoplastic matrix material.

Typically, a yarn comprising reinforcing material filaments may comprise many reinforcing material filaments, sometimes thousands of filaments.

Commercially available yarns of reinforcing material, e.g. carbon fibres, may be "sized", i.e. coated with various chemicals. The nature and function(s) of the sizing may relate to the production of the fibre, the processing of the fibre and the interfacial properties that the sizing provides between the fibre surface and the composite matrix or other environment in which it is located. For the present disclosure, it is preferred that the yarns of reinforcing material are unsized, since sizing can degrade at the elevated temperatures used for thermoforming, and thereby generate undesired impurities in the composite article produced. Alternatively, if sized yarns of reinforcing material are used, the sizing should preferably be resistant to degradation at high temperature, e.g. 400°C, or at least the melting temperature of the thermoplastic matrix material being used.

In addition to one or more of the features described above, or as an alternative, yarns of reinforcing material filaments may comprise IM7 carbon yarns, IM8 carbon yarns, T700 carbon yarns or mixtures thereof.

The yarns including both reinforcing material filaments and a thermoplastic matrix material may each comprise a mixture of reinforcing material filaments and thermoplastic matrix material filaments combined to form a single comingled yarn. Additionally or alternatively, the yarns including both reinforcing material filaments and a thermoplastic matrix material may each comprise one or more yarns of reinforcing material filaments combined (preferably intimately combined, e.g. twisted) with one or more yarns of filaments of thermoplastic matrix material. Optionally, the yarns including reinforcing material filaments and/or thermoplastic matrix material filaments may be coated or powdered with the thermoplastic matrix material.

In the second step of the method of this disclosure, the preform is placed in a mould. The mould typically corresponds at least substantially with the desired shape of the composite article to be manufactured. If it is desired to produce an aircraft propeller blade or fan blade, the mould shape may alternatively correspond to a hollow form of the blade, into which a core may be inserted later.

The step of thermoforming includes applying a cycle with different pressures and temperatures to the preform in a mould. In the thermoforming step heat and/or pressure may be applied to the preform to consolidate the various composite materials, and the thermoplastic matrix material may then be cured using heat and then cooling.

In a thermoforming step, the aforementioned cycle includes: a first phase during which the temperature within the mould is increased above the melting temperature of the thermoplastic matrix material at a first, relatively low pressure; and a subsequent phase during which the pressure is increased gradually or stepwise to a second pressure higher than the first pressure whilst maintaining the temperature within the mould above the melting temperature of the thermoplastic matrix material.

For example, the thermoforming may include gradually raising the temperature to a forming temperature whilst the pressure remains unchanged, then holding the temperature at the forming temperature whilst the pressure is increased to a forming pressure. The pressure may be changed gradually or in step changes. The forming temperature will typically be a temperature above the melting temperature of the thermoplastic matrix material so as to allow it to become fused together with the reinforcing material.

The composite is then cooled (e.g. allowed to cool) within the mould to below the glass transition temperature of the thermoplastic matrix material. During the cooling step, the temperature is typically gradually reduced below the glass transition temperature of the thermoplastic matrix material, e.g. to ambient temperature.

The composite article is then removed from the mould.

Optionally, prior to removing the composite article from the mould the cooling of the composite occurs at least partially at a third pressure higher than the first pressure, wherein the third pressure may be higher, lower or the same as the second pressure.

The method may include other steps to produce the composite article. For example, the method may include removal of the article from the mould after thermoforming and subsequent machining of features thereof to obtain a final shape. Additionally or alternatively, if the article is an aircraft propeller blade or fan blade, the leading edge and/or a tip cap may be added with the leading edge and/or tip cap being made of a different material to the remainder of the blade, as is known in this field. The leading edge and/or the tip cap may be joined to the remainder of the blade by means of a surface matrix film. Additional layers such as over-moulded layers, coatings or films may be added after thermoforming. Where the composite material uses a thermoplastic such as PEEK then the method may include overmoulding with the same thermoplastic. This can provide a greater erosion resistance than other coatings whilst also ensuring secure adhesion of the outer layer to the textile composite material and avoiding the use of adhesive.

Viewed from another aspect, the present disclosure provides a composite article, such as an aircraft propeller blade or fan blade, manufactured by any method disclosed herein.

It will be readily appreciated by the skilled person that the various optional and preferred features of the disclosure as described above may be applicable to all the various aspects of the disclosure discussed, wherein the scope of protection is defined by the appended claims.

### Brief description of the Figures

Certain preferred aspects of the present disclosure will now be described in greater detail, by way of example only and with reference to the accompanying drawings, in which:
Figure 1 is a flow diagram illustrating the steps required to manufacture a composite aircraft blade according to an embodiment of the disclosure;
Figure 2 illustrates a cross section of an exemplary comingled yarn; and
Figure 3 illustrates an exemplary temperature and pressure cycle applied to consolidate the composite material.

### Detailed description

By way of example, the present disclosure is described in the context of a method of manufacturing a composite aircraft blade comprising a polyether ether ketone (PEEK) thermoplastic matrix material reinforced with carbon filaments. Whilst a composite comprising PEEK matrix and carbon filaments is considered advantageous, such materials are not essential, and other matrix materials and reinforcing material filaments may alternatively be used. For example, the matrix material may alternatively be polyetherketoneketone (PEKK), polyaryletherketone (PAEK). Similarly, the reinforcing material may alternatively be glass filaments or aramid filaments.

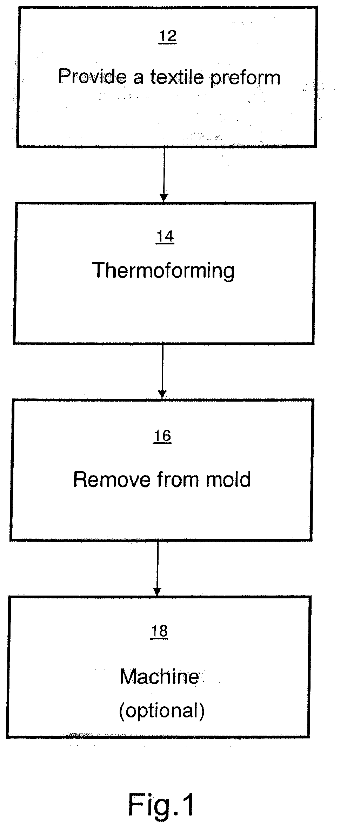

A method of manufacturing a composite aircraft blade, in particular a fan blade, according to an embodiment of the disclosure will now be described in relation to the method steps illustrated in Figure 1. At step 12, a preform is created as a fabric structure resulting from the combination of filaments of reinforcing material with filaments of a thermoplastic matrix material, in this example by weaving together comingled yarns that contain both carbon filaments and PEEK filaments.

As described above, other fabric manufacturing processes may alternatively be used to form the fabric structure. For example, a fabric structure may alternatively be formed by knitting, braiding or extruding yarns together. Two-dimensional textile layers may be joined together by stitching or welding to form a three-dimensional woven structure.

Yarns including both reinforcing material filaments and a matrix material are known to those skilled in the art.

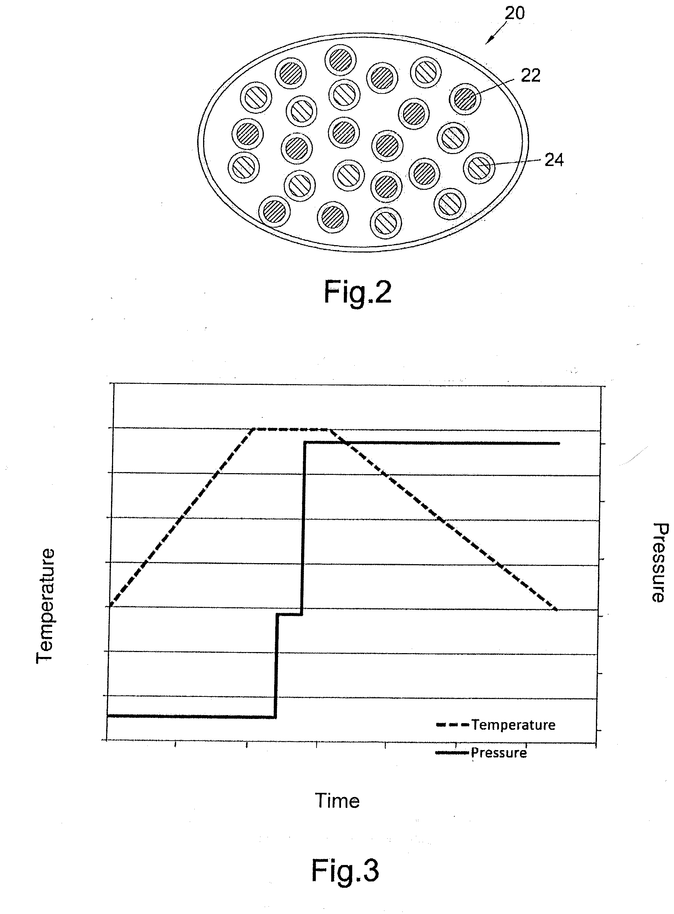

An example of a comingled yarn 20 is shown in cross section in Figure 2. In this example, the comingled yarn comprises a mixture of both carbon filaments 22 and PEEK filaments 24, combined to form a single yarn.

Instead of (or in addition to) using yarns including both reinforcing material filaments and a matrix material, yarns comprising only reinforcing material filaments and yarns comprising only matrix material filaments may be combined to form the fabric structure.

The yarns may be formed of stretch broken filaments, comprising discontinuous filaments. Yarns of stretch broken filaments are more pliable and can be more easily formed into complex shapes than yarns containing continuous filaments. Alternatively, the yarns may comprise continuous filaments.

According to the present disclosure, high molecular weight PEEK polymers are preferred for the manufacture of composite aircraft blades due to their particularly high impact resistance. Suitable grades of PEEK for this purpose have a weight average molecular weight (M_{W}) of at least 85 000. Methods of measuring the molecular weights of polymers are generally known in the art. Weight average molecular weight (M_{W}) is usually determined by light scattering techniques or gel permeation chromatography (GPC). For a general review of the latter technique, see Chapter 17 of Handbook of Polymer Synthesis, Characterization and Processing, Wiley (2013). For the application of light scattering and GPC Techniques to the molecular weight determination of PEEK polymers, see J. Devaux et al in Polymer 26(13), 1994-2000 (1985) and H. M. Colquhoun et al in Chem. Commun. (2007), 3365-3367.

PEEK polymers suitable for use in the presently disclosed method may have high viscosity. For example, PEEK for use in the method of this disclosure may have a viscosity of at least 250 Pa.s, or at least 300 Pa.s, or at least 350 Pa.s, or at least 400 Pa.s, or at least 450 Pa.s, as measured according to test ISO 11443 at 400°C.

PEEK is commercially available in a variety of forms including unfilled pellets, coarse and fine powders, fibres and films. One commercial supplier of PEEK in different grades and forms is Victrex pic, Thornton Cleveleys, Lancashire, UK. PEEK suitable for use in the presently disclosed method may be characterised by relatively higher viscosity, higher melting point and longer polymer chains.

As mentioned above, processing of PEEK polymers can be problematic due to their high viscosity, especially at the desired high molecular weight. However, combining PEEK filaments with filaments of reinforcing material such as carbon in a textile preform facilitates the manufacture of composite articles by thermoforming, in accordance with the present disclosure.

Filaments or yarns of carbon fibre, PEEK or other composite materials are commercially available or made in known manner.

As described above, the thermoplastic matrix material is combined with the reinforcing material in the fabric structure which serves as the preform. In the presently described example, the matrix material is woven within the preform. Alternatively, it may be non-woven, braided, etc.

The relative amounts of the reinforcing material and the matrix material in the preform may vary according to the particular use requirements for the finished composite article. By way of example, the weight ratio of reinforcing material to matrix material in the preform may typically vary from 70:30 to 45:55, preferably 65:35 to 50:50, more preferably 60:40 to 55:45.

The provision of a woven three-dimensional fabric structure may be preferred for the preform, as it removes the need to stitch or weld numerous two-dimensional layers together in order to form a laminate product, thus enabling the product to be produced more quickly and easily. This may also obviate the problem of delamination of the composite product by providing full three-dimensional reinforcement. The resulting composite component may therefore have a superior strength and impact resistance compared to a laminated component.

Returning now to the process illustrated in Figure 1, at step 14, the preform undergoes a thermoforming process to form and consolidate the composite fan blade.

The preform is placed into a mould cavity (the mould cavity having the shape of the desired fan blade). A thermoforming temperature/pressure cycle is then carried out to consolidate the fan blade. Firstly, the mould is heated above the melting temperature of the PEEK so that the matrix material liquefies. In order to ensure that all of the PEEK within the preform is melted, the preform should generally be heated to at least 343°C. A relatively low pressure, e.g. in the range 0.05 to 1.0 MPa, preferably 0.05 to 0.5 MPa, more preferably 0.1 to 0.3 MPa, is applied to the materials within the mould during the heating process in order to maintain contact between the PEEK and the carbon filaments, wherein the pressures which are in line with the invention are defined in claim 1.

This is intended to ensure that the liquid PEEK fills any gaps between the carbon filaments. By melting the PEEK, the preform becomes impregnated with the liquid PEEK matrix material. The liquid PEEK takes the shape of the mould, i.e. in this example the shape of a fan blade. The pressure is then increased to a "forming pressure", to form the article. This may be done gradually or stepwise. As the skilled person would recognise, the suitable temperatures and pressures to apply would vary according to the particular situation. However, a typical forming pressure for PEEK composites reinforced with carbon would be greater than 1.0 MPa, e.g. in the range of 2.0 - 5.0 MPa, preferably 3.0 - 4.0 MPa, wherein the pressures which are in line with the invention are defined in claim 1.

Additionally, the skilled person would recognise that the duration of each stage is dependent upon the nature of the component materials of the preform as well as the size and shape of the preform and the technical characteristics of the press used. In general, during each phase the chosen pressure is continued until displacement of the press ceases. Typically this may take from 5-30 minutes. The entire method of this disclosure may therefore last from several minutes to several hours.

An example thermoforming cycle for such a carbon filament / PEEK composite is schematically shown in Figure 3. In this example, the temperature cycle comprises gradually heating the preform to a temperature above the melting point of the PEEK matrix material (343°C). Although the temperature may be raised slightly above the melting temperature of the thermoplastic matrix material, it is not energy efficient to raise the temperature substantially higher. Moreover, above a certain temperature (e.g. around 420°C for PEEK) degradation of the polymer begins to occur. Within the constraints imposed by the characteristics of the press used, the rate of heating should be suitable to the nature of the composite materials and the size and shape of the article being made, and may be selected within a range that would be apparent to a person skilled in this art. The heating rate should be sufficiently low to ensure reasonably uniform heat distribution within the preform, but not so low that the processing time is so long as to render the process uneconomic. A heating rate in the range of from 3-20°C/minute may be chosen, with a rate of 10°C/min being typical. The temperature is maintained at a value above the melting point for a suitable time (in this example, around 30 minutes) before being gradually reduced to below the glass transition temperature of the PEEK matrix material (143°C), ready for demoulding.

Simultaneously, a pressure cycle comprises applying to the preform a small pressure (namely a first, relatively low pressure, just to keep the materials in contact whilst the PEEK is melting; in this example, around 0.25 MPa). After the melting (or maximum) temperature has been reached, this first pressure may be maintained for a time (in this example, for around 10 minutes). The pressure is then raised continuously or stepwise. In this example, the pressure is raised stepwise: firstly to around 1.4 MPa for around 10 minutes, and then raised further, to around 3.4 MPa. This high pressure may then be maintained for the remainder of the pressure cycle, (in this example, for around 10 minutes) until the temperature begins to decrease. In other words, this example of thermoforming includes gradually raising the temperature whilst the pressure remains unchanged, holding the temperature constant whilst the pressure is increased in step changes to a forming pressure, and then gradually reducing the temperature to below the glass transition temperature of the PEEK matrix material, e.g. to ambient temperature.

While the composite article cools within the mould, the PEEK matrix material impregnated within the textile preform cools and solidifies in the required shape. Once the PEEK has cooled to below its glass transition temperature the composite article can be removed from the mould (step 16). By removing the composite article from the mould at a temperature below the glass transition temperature of the thermoplastic matrix material, it is ensured that the matrix material has hardened sufficiently so that it does not deform once it is removed from the mould.

The composite article removed from the mould is, for example, a composite aircraft blade. This may be formed and shaped so that no additional machining is required to obtain the desired blade geometry. However, optionally, a further step 18 may be carried out in which the composite blade or other article is machined into the desired finished shape. Alternatively, or in addition, an overmoulding process may be applied to the composite blade or other article, to provide a thermoplastic matrix coating to the blade.

Since the PEEK matrix material is within the yarns which are combined together in the first part of the method of this disclosure there is no need to impregnate the woven preform with liquid PEEK after it has been formed. This is advantageous because it is difficult to inject thermoplastics into conventional woven preforms due to the high viscosity of liquid thermoplastics. Consequently it is difficult to fully impregnate conventional woven preforms with thermoplastic matrix material, and also to inject thermoplastics into woven preforms containing a high density of reinforcing material filaments. When the matrix material is part of the yarns that are combined in the (e.g. woven) textile preform and this is heated in accordance with the present disclosure, the matrix material melts and the liquid matrix material impregnates the reinforcing material filaments. This allows for quicker and easier manufacturing, avoiding the need for complex prior art manufacturing steps. It will be appreciated that these advantages are equally applicable for different types of reinforcing material, and for structures manufactured by techniques other than weaving, e.g. knitting or braiding. An important feature of the present disclosure is that the matrix material is included within the initial fabric structure, so that subsequent injection of matrix material is not required.

One difficult manufacturing step avoided by the present disclosure is the polymerisation of the thermoplastic matrix material once it has impregnated the woven preform, which is required in prior art methods. Thermoplastics comprising smaller polymer chains are less viscous than those with longer polymer chains. However, thermoplastics with small polymer chains do not possess the necessary properties for use in the manufacture of aircraft blades. According to prior art methods, thermoplastics comprising small polymer chains are injected into a textile preform and polymerised in order to produce longer polymer chains. In the presently disclosed method this process is not required so there is no need to perform any chemical polymerisation reactions once the thermoplastic has impregnated the textile preform. Since such steps are obviated by the present disclosure, the process of the present disclosure is simpler and quicker than prior art processes for manufacturing aircraft blades.

Thus, it will be appreciated that the method of this disclosure enables reinforced thermoplastic composite aircraft blades to be manufactured more quickly and more easily than other previously disclosed methods. Typically, thermosetting matrix materials have been utilised in composite aircraft blades because of their relative ease of production. Thermosetting plastics have lower viscosity than thermoplastics, and therefore do not suffer from many of the issues caused when injecting the matrix material into the woven preform. However, thermoplastic materials have superior mechanical resistance properties when compared with thermosetting plastics. Furthermore, thermoplastic is more easily stored than thermoset, which avoids issues due to expiration date. Moreover, there is no chemical reaction during the manufacturing process, and thus no hazardous chemicals are produced.

Thermoplastics can also be remoulded or reshaped allowing for simple and cost effective repair of thermoplastic components. Thus, the method of the present disclosure which provides a process in which a textile preform is used with a thermoplastic, but in which the thermoplastic does not need to be injected, allows for the improved production of aircraft blades with better resistance to high speed impacts with birds and other foreign objects.

Aircraft blades produced by the method of the disclosure benefit from increased impact resistance due to the combination of a textile structure and a thermoplastic matrix. Impact resistance may be measured according to standardised tests such as the Charpy impact test. Preferably, the (unreinforced) thermoplastic matrix material (e.g. of PEEK, PEKK or PAEK) has a notched Charpy impact strength of at least 5 kJ/m² at 23°C when measured according to test ISO 179/eA. The high impact resistance of the composite material also allows for the manufacture of thinner and lighter composite fan blades and propeller blades, thereby increasing the aerodynamic performance of the aircraft.

Although the present disclosure has been described in the context of a method of manufacturing a composite fan blade, the disclosed method is equally applicable for the manufacture of other aircraft blades, such as composite propeller blades, or other articles.

## Claims

1. A method of manufacturing a composite article, the method comprising:
providing a textile preform (12) comprising a combination of filaments of reinforcing material with filaments of a thermoplastic matrix material;
placing the preform in a mould;
thermoforming (14) the textile preform within the mould to consolidate the textile preform into a composite, the thermoforming including increasing the temperature above the melting temperature of the thermoplastic matrix material and applying pressure;
cooling the composite within the mould to below the glass transition temperature of the thermoplastic matrix material, thereby forming a composite article; and
removing the composite article from the mould (16);
wherein at least a part of the filaments in the textile preform is in the form of (a) yarns each comprising a mixture of the reinforcing material filaments and the thermoplastic matrix material filaments combined to form a single comingled yarn (20), and/or (b) one or more yarns of the reinforcing material filaments combined with one or more yarns of the thermoplastic matrix material filaments;
**characterised in that** the thermoplastic matrix material used in the method has a weight average molecular weight (M_{W}) of at least 85 000,
and wherein the thermoforming includes:
a first phase during which the temperature within the mould is increased above the melting temperature of the thermoplastic matrix material at a first pressure in the range of 0.05 to 1.0 MPa; and
a subsequent phase during which the pressure is increased gradually or stepwise to a second pressure of more than 1.0 MPa and up to 5.0 MPa, whilst maintaining the temperature within the mould above the melting temperature of the thermoplastic matrix material.

2. A method as claimed in claim 1 wherein the thermoplastic matrix material used in the method has a viscosity of at least 250 Pa.s, as measured according to test ISO 11443 at 400°C.

3. A method as claimed in claim 1 or claim 2 wherein the article is an aircraft propeller blade or fan blade.

4. A method as claimed in any preceding claim wherein each yarn that contains filaments of thermoplastic matrix material comprises at least 1000 filaments of thermoplastic matrix material.

5. A method as claimed in any preceding claim, wherein the textile preform further comprises:
one or more yarns of reinforcing material filaments coated with the thermoplastic matrix material; and/or
one or more yarns of reinforcing material filaments powdered with the thermoplastic matrix material.

6. A method as claimed in any preceding claim, wherein the thermoplastic matrix material comprises any one of polyether ether ketone (PEEK), polyetherketoneketone (PEKK), polyaryletherketone (PAEK) or mixtures thereof, preferably PEEK.

7. A method as claimed in any preceding claim, wherein the thermoplastic matrix material has a notched Charpy impact strength of at least 5 kJ/m² at 23°C when measured according to test ISO 179/eA.

8. A method as claimed in any preceding claim, wherein the reinforcing material filaments comprise carbon, glass, an aramid or mixtures thereof, preferably carbon.

9. A method as claimed in any preceding claim, wherein the textile preform is made by weaving, knitting or braiding the yarns; optionally wherein weaving, knitting or braiding comprises three-dimensional weaving, knitting or braiding techniques to form a three-dimensional fabric structure.

10. A method as claimed in any preceding claim wherein the first pressure is 0.1 to 0.3 MPa.

11. A method as claimed in any preceding claim wherein the second pressure is from 3.0 to 4.0 MPa.

12. A method as claimed in any preceding claim, wherein prior to removing the composite article from the mould the cooling of the composite is at least partially effected at a third pressure higher than the first pressure, wherein the third pressure may be higher, lower or the same as the second pressure.

13. A method as claimed in any preceding claim, wherein after removing the composite article from the mould the method further comprises the step of machining the composite article to form the final shape of the composite article;
and/or the method further comprises performing an overmoulding process on the composite article to provide a thermoplastic matrix coating to the composite article.

## Patentansprüche

1. Verfahren zur Herstellung eines Verbundartikels, wobei das Verfahren Folgendes umfasst:
Bereitstellen eines textilen Halbzeugs (12), das eine Kombination aus Filamenten aus Verstärkungsmaterial mit Filamenten aus einem thermoplastischen Matrixmaterial umfasst;
Anordnen des Halbzeugs in einer Form;
Thermoformen (14) des textilen Halbzeugs innerhalb der Form, um das textile Halbzeug zu einem Verbundstoff zu festigen, wobei das Thermoformen Erhöhen der Temperatur über die Schmelztemperatur des thermoplastischen Matrixmaterials und Ausüben von Druck beinhaltet;
Kühlen des Verbundstoffs innerhalb der Form auf unter die Glasübergangstemperatur des thermoplastischen Matrixmaterials, wodurch ein Verbundartikel ausgebildet wird; und
Entfernen des Verbundartikels aus der Form (16);
wobei mindestens ein Teil der Filamente in dem textilen Halbzeug in der Form von (a) Fäden, die jeweils eine Mischung aus den Filamenten aus Verstärkungsmaterial und den Filamenten aus thermoplastischem Matrixmaterial umfassen, die kombiniert sind, um ein einzelnes Mischgarn (20) zu bilden, und/oder (b) einem oder mehreren Fäden der Filamente aus Verstärkungsmaterial kombiniert mit einem oder mehreren Fäden der Filamente aus thermoplastischem Matrixmaterial vorliegt;
**dadurch gekennzeichnet, dass** das thermoplastische Matrixmaterial, das in dem Verfahren verwendet wird, ein durchschnittliches Molekulargewicht (M_{w}) von mindestens 85000 aufweist,
und wobei das Thermoformen Folgendes beinhaltet:
eine erste Phase, während der die Temperatur innerhalb der Form über die Schmelztemperatur des thermoplastischen Matrixmaterials bei einem ersten Druck im Bereich von 0,05 bis 1,0 MPa erhöht wird; und
eine nachfolgende Phase, während der der Druck allmählich oder stufenweise auf einen zweiten Druck von mehr als 1,0 MPa und bis zu 5,0 MPa erhöht wird, während die Temperatur innerhalb der Form über der Schmelztemperatur des thermoplastischen Matrixmaterials gehalten wird.

2. Verfahren nach Anspruch 1, wobei das thermoplastische Matrixmaterial, das in dem Verfahren verwendet wird, eine Viskosität von mindestens 250 Pa·s, gemessen gemäß Test ISO 11443 bei 400 °C, aufweist.

3. Verfahren nach Anspruch 1 oder Anspruch 2, wobei der Artikel ein Flugzeugpropellerblatt oder ein Lüfterblatt ist.

4. Verfahren nach einem der vorstehenden Ansprüche, wobei jeder Faden, der Filamente aus thermoplastischem Matrixmaterial enthält, mindestens 1000 Filamente aus thermoplastischem Matrixmaterial umfasst.

5. Verfahren nach einem der vorstehenden Ansprüche, wobei das textile Halbzeug ferner Folgendes umfasst:
einen oder mehrere Fäden aus Filamenten aus Verstärkungsmaterial, die mit thermoplastischem Matrixmaterial beschichtet sind; und/oder
einen oder mehrere Fäden aus Filamenten aus Verstärkungsmaterial, die mit thermoplastischem Matrixmaterial bestäubt sind.

6. Verfahren nach einem der vorstehenden Ansprüche, wobei das thermoplastische Matrixmaterial ein beliebiges von Polyetheretherketon (PEEK), Polyetherketonketon (PEKK), Polyaryletherketon (PAEK) oder Mischungen daraus, vorzugsweise PEEK, umfasst.

7. Verfahren nach einem der vorstehenden Ansprüche, wobei das thermoplastische Matrixmaterial eine Kerbschlagzähigkeit nach Charpy von mindestens 5 kJ/m² bei 23 °C aufweist, gemessen gemäß Test ISO 179/eA.

8. Verfahren nach einem der vorstehenden Ansprüche, wobei die Filamente aus Verstärkungsmaterial Kohlenstoff, Glas, ein Aramid oder Mischungen daraus, vorzugsweise Kohlenstoff, umfassen.

9. Verfahren nach einem der vorstehenden Ansprüche, wobei das textile Halbzeug durch Weben, Stricken oder Flechten der Fäden gefertigt wird; wobei optional das Weben, Stricken oder Flechten dreidimensionale Web-, Strick- oder Flechttechniken umfasst, um eine dreidimensionale Gewebestruktur auszubilden.

10. Verfahren nach einem der vorstehenden Ansprüche, wobei der erste Druck 0,1 bis 0,3 MPa beträgt.

11. Verfahren nach einem der vorstehenden Ansprüche, wobei der zweite Druck 3,0 bis 4,0 MPa beträgt.

12. Verfahren nach einem der vorstehenden Ansprüche, wobei vor dem Entfernen des Verbundartikels aus der Form das Kühlen des Verbundstoffs zumindest teilweise bei einem dritten Druck bewirkt wird, der höher als der erste Druck ist, wobei der dritte Druck höher als, niedriger als oder gleich dem zweiten Druck sein kann.

13. Verfahren nach einem der vorstehenden Ansprüche, wobei nach dem Entfernen des Verbundartikels aus der Form das Verfahren ferner den Schritt einer maschinellen Bearbeitung des Verbundartikels umfasst, um die endgültige Form des Verbundartikels auszubilden;
und/oder das Verfahren ferner Durchführen eines Überformungsprozesses an dem Verbundartikel umfasst, um eine thermoplastische Matrixbeschichtung an dem Verbundartikel bereitzustellen.

## Revendications

1. Procédé de fabrication d'un article composite, le procédé comprenant :
la fourniture d'une préforme textile (12) comprenant une combinaison de filaments de matériau de renforcement avec des filaments d'un matériau de matrice thermoplastique ;
le placement de la préforme dans un moule ;
le thermoformage (14) de la préforme textile à l'intérieur du moule pour consolider la préforme textile en un composite, le thermoformage comportant l'augmentation de la température au-dessus de la température de fusion du matériau de matrice thermoplastique et l'application d'une pression ;
le refroidissement du composite à l'intérieur du moule en dessous de la température de transition vitreuse du matériau de matrice thermoplastique, formant ainsi un article composite ; et
le retrait de l'article composite du moule (16) ;
dans lequel au moins une partie des filaments dans la préforme textile est sous la forme (a) de fils comprenant chacun un mélange des filaments de matériau de renforcement et des filaments de matériau de matrice thermoplastique combinés pour former un seul fil mélangé (20), et/ou (b) d'un ou de plusieurs fils des filaments de matériau de renforcement combinés avec un ou plusieurs fils des filaments de matériau de matrice thermoplastique ;
**caractérisé en ce que** le matériau de matrice thermoplastique utilisé dans le procédé a un poids moléculaire moyen en poids (M_{w}) d'au moins 85 000,
et dans lequel le thermoformage comporte :
une première phase au cours de laquelle la température à l'intérieur du moule est augmentée au-dessus de la température de fusion du matériau de matrice thermoplastique à une première pression dans la plage de 0,05 à 1,0 MPa ; et
une phase ultérieure au cours de laquelle la pression est augmentée progressivement ou par paliers jusqu'à une deuxième pression supérieure à 1,0 MPa et jusqu'à 5,0 MPa, tout en maintenant la température à l'intérieur du moule au-dessus de la température de fusion du matériau de matrice thermoplastique.

2. Procédé selon la revendication 1, dans lequel le matériau de matrice thermoplastique utilisé dans le procédé a une viscosité d'au moins 250 Pa.s, telle que mesurée selon le test ISO 11443 à 400 °C.

3. Procédé selon la revendication 1 ou la revendication 2, dans lequel l'article est une pale d'hélice d'aéronef ou une pale de soufflante.

4. Procédé selon une quelconque revendication précédente, dans lequel chaque fil qui contient des filaments de matériau de matrice thermoplastique comprend au moins 1 000 filaments de matériau de matrice thermoplastique.

5. Procédé selon une quelconque revendication précédente, dans lequel la préforme textile comprend en outre :
un ou plusieurs fils de filaments de matériau de renforcement revêtus du matériau de matrice thermoplastique ; et/ou
un ou plusieurs fils de filaments de matériau de renforcement en poudre avec le matériau de matrice thermoplastique.

6. Procédé selon une quelconque revendication précédente, dans lequel le matériau de matrice thermoplastique comprend l'une quelconque parmi la polyétheréthercétone (PEEK), la polyéthercétonecétone (PEKK), la polyaryléthercétone (PAEK) ou leurs mélanges, de préférence la PEEK.

7. Procédé selon une quelconque revendication précédente, dans lequel le matériau de matrice thermoplastique a une résistance au choc Charpy avec entaille d'au moins 5 kJ/m² à 23 °C lorsqu'elle est mesurée selon le test ISO 179/eA.

8. Procédé selon une quelconque revendication précédente, dans lequel les filaments de matériau de renforcement comprennent du carbone, du verre, un aramide ou leurs mélanges, de préférence du carbone.

9. Procédé selon une quelconque revendication précédente, dans lequel la préforme textile est réalisée en tissant, tricotant ou tressant les fils ; éventuellement dans lequel le tissage, le tricotage ou le tressage comprend des techniques de tissage, de tricotage ou de tressage tridimensionnelles pour former une structure de tissu tridimensionnelle.

10. Procédé selon une quelconque revendication précédente, dans lequel la première pression est de 0,1 à 0,3 MPa.

11. Procédé selon une quelconque revendication précédente, dans lequel la deuxième pression est de 3,0 à 4,0 MPa.

12. Procédé selon une quelconque revendication précédente, dans lequel, avant de retirer l'article composite du moule, le refroidissement du composite est au moins partiellement effectué à une troisième pression supérieure à la première pression, dans lequel la troisième pression peut être supérieure, inférieure ou identique à la deuxième pression.

13. Procédé selon une quelconque revendication précédente, dans lequel après avoir retiré l'article composite du moule, le procédé comprend en outre l'étape d'usinage de l'article composite pour former la forme finale de l'article composite ; et/ou le procédé comprend en outre la réalisation d'un processus de surmoulage sur l'article composite pour fournir un revêtement de matrice thermoplastique à l'article composite.
